# EUROPEAN PATENT SPECIFICATION

(11) **EP 3 192 363 B1**
(45) Date of publication and mention of the grant of the patent: **24.06.2020**
(21) Application number: 17000042.6
(22) Date of filing: 11.01.2017
(51) Int. Cl.: A01K 15/02

(54) **DOG TOY COMPRISING A MEMBRANE DISC**
HUNDESPIELZEUG MIT EINER SCHEIBENFÖRMIGEN MEMBRAN
JOUET POUR UN CHIEN COMPRENANT UNE MEMBRANE DISCOÏDE

(30) Priority: 15.01.2016 HU 1600023
(43) Date of publication of application: 19.07.2017
(73) Proprietor: Sebö, Gyula, 2310 Szigetszentmiklós (HU)
(72) Inventor: Sebö, Gyula, 2310 Szigetszentmiklós (HU)

(56) References cited:
- WO-A1-2004/043142
- DE-U1- 29 917 816
- US-A- 5 865 146
- US-A1- 2007 234 969

## Description

A membrane disc dog toy comprising a bite body and a handle, where said handle has a fixing end element closing a membrane through opening of a membrane disc separating a closed cell portion from a cavity portion, then passes through the membrane through opening in the continuation thereof and continues in a variable length handle portion in the closed cell portion in the direction of the axis line, the length of which varies as a function of the forces acting through the handle and the stretching of the membrane disc, and thereby reduces the shock on the joints of the dog and the person holding the handle while playing tug-of-war with the dog.

Playing with the dog serves to bring out the most basic instincts of the dog. At the same time, playing with the dog has a positive, one might say personality-forming effect on the dog owner. While playing, happiness hormones are released in both parties, therefore dogs are used successfully in practice worldwide as perfect therapists for people with mental disabilities, depression, or suffering an accident. There is a need, however, for making untrained dogs suitable for helping ill people through playing. It is a fact, nevertheless, that when playing with dogs some basic rules need to be followed in most cases, to make the game interesting for the dog as well. If we can develop a device suitable for being grabbed by the dog with its teeth, and also suitable for being held by the dog owner or the treated person in such a way that it does not accidentally pose a danger to the teeth of the dog, then we can witness the most intense game between the dog and the person. This so called tug-of-war game, aimed on the part of the dog at acquiring the target, gives a body-to-body experience and relaxation to both parties.

Even with the conscious pairing of the weight and strength of the playing parties, many forces arising from the pulling, tugging of the dog trying to acquire the target act on the hand, shoulder, spine of the person holding the handle of the target. The unexpected forces, the multitude of micro-vibrations can cause injury or pain to the arm, waist of the dog owner or the treated person. The same forces act on the neck of the dog as well, and can cause injury to a puppy or an older dog. Furthermore, a toy is interesting, desirable and engaging for dogs only if the prey moves in their direction when pulled. This positive reinforcement leads to the development of the tug-of-war skills and the play instinct itself for every dog.

However, the dog owner or treated person cannot be expected to react to the movements of the dog correctly and in a timely manner while playing. A dog toy designed to be suitable for elastic stretching while playing tug-of-war allows the person holding the handle to motivate the dog to play without being experienced in this activity. The aim is to allow people with disabilities to play freely with a dog, whether or not owned by them, on a daily basis, often unconsciously pushing themselves beyond their physical and mental limits. The happiness of a dog is proven to be captivating, and has a very positive effect on ill people. The most intense and safest generator for transferring the mood could be a dog toy comprising a handle allowing a secure grip and a bite body grabbed happily by the dog, where said dog toy is dimensionally stable, but suitable for elastic stretching. The membrane disc dog toy allows a game in which there is very close physical contact between the dog and the person. The dog is inspired to continue playing by the elastic stretching caused by the forces exerted by it.

The attention of the dog owner or the person receiving the therapy is engaged by the close contact with the dog to the maximum. Under proper trainer supervision it is very effective in lifting inhibitions for people with serious illnesses, physical disabilities, or even depression. It is important, however, that the connection between the dog toy and the handle shall not be associated with any risk of the handle being torn out, because that can be dangerous to the health of, or a disastrous experience for the person receiving the therapy. When playing regularly, the design of the handle and the bite portion shall protect the person receiving the therapy from the physical impacts caused by the micro-vibrations and the tugging.

The tug-of-war game shall be interesting and rewarding for the dog even if the treated person is only capable of rigidly holding the handle of the dog toy. The dog toy, when fixed on a human body or a wheelchair, shall be suitable for allowing the dog to actively engage the person sitting therein in the game for up to 10-20 minutes. The elasticity of the dog toy is most preferably provided by a membrane disc formed inside the bite body, because this way the extent of stretching is highly controllable. The dog toy, as the target, is most preferably made of natural caoutchouc, silicone or TPE plastic by the injection moulding or baking process.

The prior art includes several dog toys with a hollow interior and an elastic outer wall. Patent No. US20070289553A1 discloses a treat dispenser for dogs. In this case there is a helically extending insert in the hollow interior. The invention discloses the most preferred embodiments of a helically extending insert for receiving and dispensing treats hidden in the hollow interior of a dog toy.

The patent does not cover the fixing of a handle, the handle is held directly by the outer wall of the device, with the wear of the outer wall leading to the handle being torn out.

The closest solution in the prior art is disclosed in patent No. US2010/0147228 A1.

In this case a motivational object comprises a handle portion, and it is fixed in a manner extending beyond the outer cover of a bite body. The essence of the invention is that the cavity portion of the device is covered on one side by an openable closing element suitable for hanging the device for example on human clothing. The handle is led through the outer wall and is fixed in the cavity portion, using the outer wall as a holding portion. The handle is held directly by the outer wall of the device, with the wear of the outer wall leading to the handle being torn out. The device is not suitable for absorbing the micro-vibrations generated while playing. It can be used efficiently only by persons experienced in using dog toys. A dog owner not familiar with the principles of the predatory (tug-of-war) game, or physically incapable of playing it, will not be able to maintain the interest of the dog. The dog will be interested only in the treat placed inside the device.

The document of the patent No US5865146 discloses a pet toy which has an elongated hollow body extending along a longitudinal axis with first and second spaced bulbous sections, each having a side wall of substantially constant cross-section throughout. The first and second sections each include respective first and second openings defining respective first and second diameters. A center section has an inner surface forming a center opening of a third diameter which is less than at least one of the first and second diameters. The center section interconnects the first and second bulbous sections. A plurality of longitudinally spaced annular ribs extend around the periphery of the bulbous sections forming grooves to facilitate an animal gripping the toy with its teeth. At least one of the bulbous ends has an opening with a diameter greater than the diameter of the center section so that a knot of a pull rope extending through the center of the pet toy will pass through the opening in the bulbous section but will not pass through the center section. Edible food treats can be placed in the pet toy through the opening(s) in the respective bulbous sections and center section which can be removed by the pet biting down on the pet toy and deforming the side wall. When the teeth of the animal deform an end of the pet toy, the ribs deflect inwardly to clean the teeth and/or massage.

The document of the utility model No. DE 299 17 816 U1 discloses a motivational game for dogs with an elastic bite body which consists of concentric annular portions having a hollow interior, and a holding element fixed inside the bite body and a spherical retaining element attached to the free end of the holding element.

The subject of the patent application No. US 2007/0234969 A1 is a device for training and/or playing with an animal, such as. dog, consisting a strap member having a throwing element e.g. ball secured to the first end portion, a handle attached to and formed from the second end portion, and a holding member for e.g. storing treats is secured to the middle portion of the strap member.

The task is to eliminate the above shortcomings, to develop an elastic handle portion stretching only to a limited extent, over a given section. The task is to prevent the fixing end element from being torn out, and any accidents resulting from that, by leading the fixing end element through a membrane disc and holding it therewith. At least 70% of the membrane disc shall be formed from the outer wall of the bite body, in the continuation thereof. The task is to optimize the stretching of the membrane disc in response to a pulling force by increasing or decreasing the thickness of the membrane disc. The task is to form the membrane disc in a manner to be perpendicular to the longitudinal axis line, or to extend towards the cavity portion, thereby increasing the maximum length of the variable length handle portion. The task is to develop an internal structure facilitating the training of the dog and the shock-free operation of the joints of the person training the dog.

The aim of the patent is to develop a membrane disc dog toy allowing people with physical or mental disabilities to use therapy dogs on a daily basis. The membrane disc dog toy, built on the predatory instincts of dogs, with the stretching of the membrane protects the person from shock on the joints caused by micro-vibrations while playing with the dog, and at the same time motivates the dog to pull the object. The patent relates to a membrane disc dog toy comprising a handle and a bite body, where said bite body comprises a cavity portion covered by an elastic outer cover having at least one through opening and a handle through opening around the axis line, furthermore said handle extending beyond the outer cover has a fixing end element fixed in the cavity portion.

The essence of the development is that in the membrane disc dog toy a membrane disc is formed by the confluence of materials, said membrane disc separates a closed cell portion from the cavity portion on the side towards the handle through opening, furthermore there is a membrane through opening in the membrane disc around the axis line, which is connected with the handle through opening on the opposite side of the closed cell portion around the axis line by a variable length handle portion of the handle of the membrane disc dog toy passing through the closed cell portion in the direction of the axis line, furthermore the variable length handle portion is led through the membrane through opening and ends in a fixing end element covering the membrane through opening on the side towards the cavity portion, furthermore the membrane disc stretches in the direction of the handle through opening as a function of the pulling force acting on the handle.

Most preferably, the diameter of the closed cell portion of the membrane disc dog toy perpendicular to the longitudinal axis line is larger in the line of the membrane disc than the diameter of the closed cell portion on the side opposite to the membrane disc, containing the handle through opening.

The maximum stretching of the membrane disc in the closed cell portion is preferably limited by the surface towards the closed cell portion of the outer cover towards the handle through opening.

The membrane disc is preferably perpendicular to the longitudinal axis line or protrudes into the cavity portion.

In the most preferred embodiment the diameter of the through opening of the outer cover is larger than the diameter of the membrane through opening.

The fixing end element preferably has a washer disc to increase the diameter of the resting surface.

The handle of the membrane disc dog toy is a strap or string.

Preferably there is an (are) embossed surface element(s) on the outer cover, protruding from the surface thereof.

In a preferred embodiment the outer cover covering the closed cell portion of the membrane disc dog toy has scent openings with a diameter of maximum 10 percent of that of the handle through opening.

Preferably there is at least one continuous embossed guide strip on the outer cover, running perpendicularly to the longitudinal axis line.

The membrane disc dog toy is illustrated in the following figures:
Figure 1 shows a side view of the membrane disc dog toy with a barrel-shaped bite body and a handle
Figure 2 shows the membrane disc dog toy from the direction of the through opening
Figure 3 shows the A-A cross-section of the outer cover and the membrane disc connected to it in the continuation thereof, and the preferred position of the fixing end element and the washer
Figure 4 shows the B-B cross-section of the main elements of the bite body, within that the closed cell portion and the variable length handle portion, and their relationship to the handle

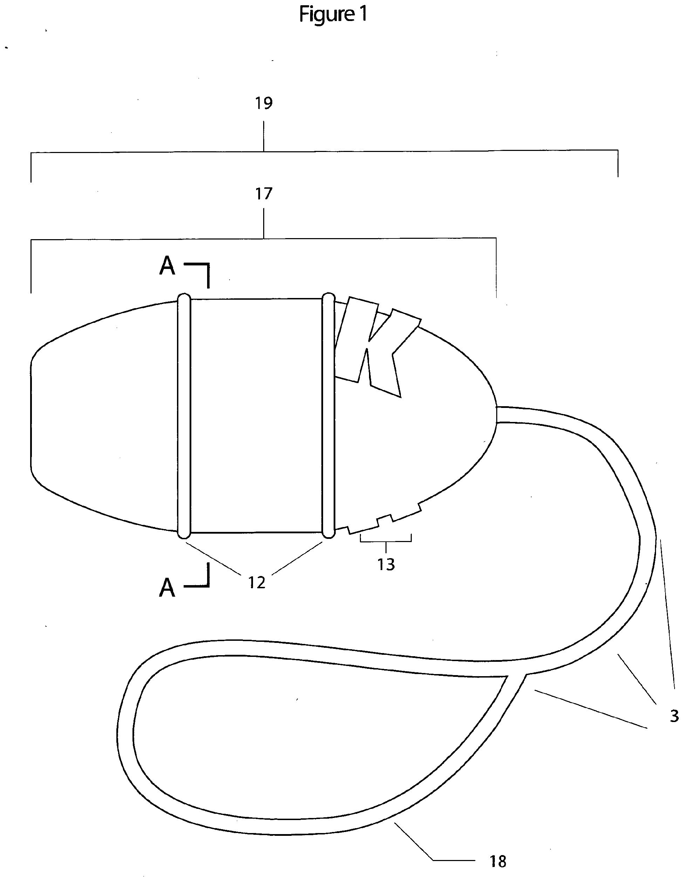

Figure 1 shows the membrane disc dog toy 19 comprising a bite body 17 and a handle 3, preferably in the shape of an elongated sphere/barrel. The handle 3 is preferably a string or strap extending beyond the bite body 17. The handle 3 ends in a gripping end element 18, which is a loop or other grip made by thickening the material.

The handle 3 extends beyond at least one side of the bite body 17.

On the surface of the bite body 17 there is an embossed surface element 13 showing graphic elements or a logo. On the bite body 17 there are at least two guide strips 12 facilitating its fixing with a fixing strap or a hook and loop fastener.

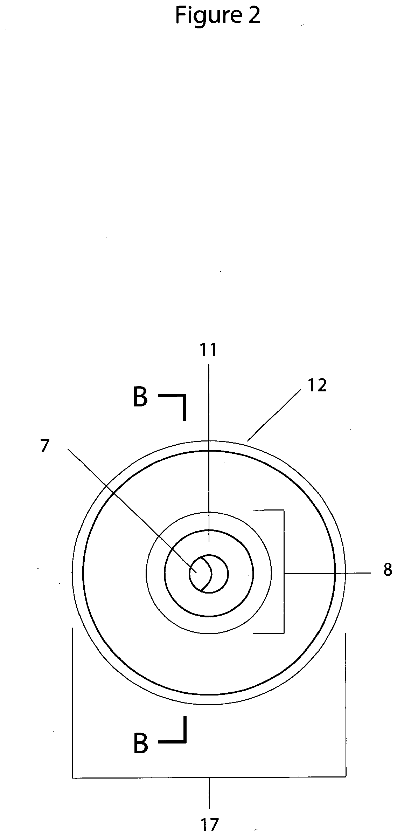

Figure 2 shows the bite body 17 from the side opposite to the handle 3 shown in Figure 1, where there is a through opening 8. The diameter of the through opening 8 is equal to or larger than the fixing end element 7. The fixing end element 7 is preferably a knot formed from the handle 3 shown in Figure 1, reinforced with a washer 11. The diameter of the washer 11 is larger than the diameter of the through opening 8. The washer 11 is preferably made of plastic.

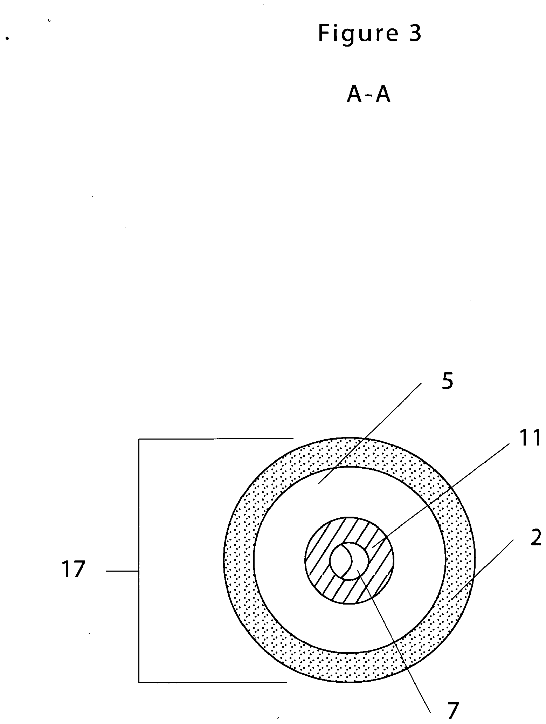

Figure 3 shows the A-A cross-section of the bite body 17 shown in Figures 1 and 2. At least 70% of the membrane disc 5 is formed from the outer cover 2, in the continuation thereof, by the confluence of materials. There is a washer 11 under the fixing end element 7 on the side towards the membrane disc 5, which is preferably made of plastic. The bite body 17 most preferably has an elongated sphere or sphere shape.

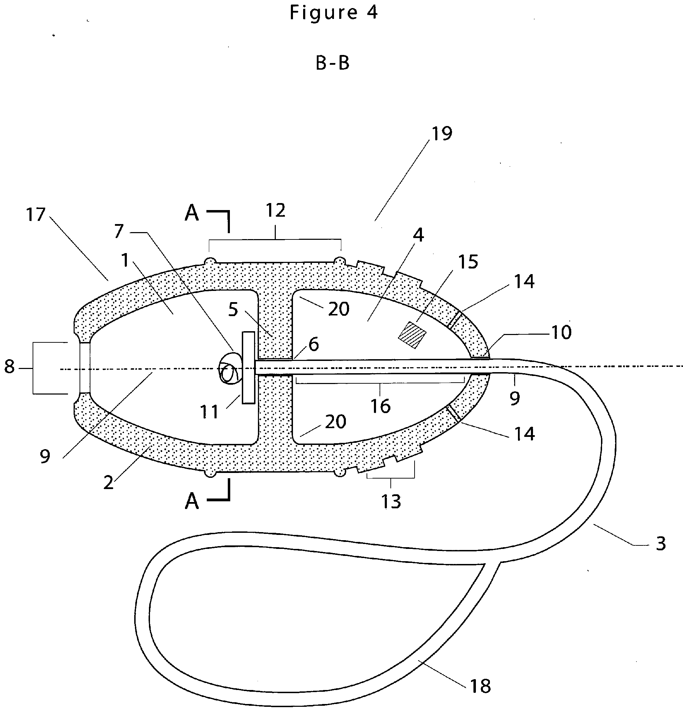

Figure 4 shows the B-B cross-section of the most preferred embodiment of the membrane disc dog toy 19 comprising a bite body 17 and a handle 3 fixed inside it. The bite body 17 comprises a cavity portion 1 covered by an outer cover 2. A membrane disc 5 separates a closed cell portion 4 from the cavity portion 1. The thickness of the membrane disc 5 differs from the thickness of the outer cover 2 by maximum 20%. The membrane disc 5 and the outer cover 2 are connected in a connecting portion 20 in an curved manner by the confluence of materials. The membrane disc 5 is perpendicular to the longitudinal axis line 9 or extends towards the cavity portion 1, peaking at the membrane through opening 6. The volume of the closed cell portion 4 and that of the cavity portion 1 preferably differ by maximum 20%. The closed cell portion 4 has at least two openings, a membrane through opening 6 into the cavity portion 1 and a handle through opening 10. In the most preferred embodiment the diameter of the membrane through opening 6 and that of the handle through opening 10 are equal, and they are filled by the handle 3 passing through them. The diameter of the closed cell portion 4 perpendicular to the longitudinal axis line 9 is larger in the line of the membrane disc 5 than the diameter of the closed cell portion 4 on the side opposite to the membrane disc 5, containing the handle through opening 10. The membrane through opening 6 is covered on the side towards the cavity portion 1 by the fixing end element 7 of the handle 3 and the washer 11. The washer 11 is preferably made of plastic, and the handle 3 ending in a variably length handle portion 16 in the continuation thereof is led through it. The variable length handle portion 16 connects the membrane through opening 6 and the handle through opening 10 along the longitudinal axis line 9. The handle 3 comprises a fixing end element 7, a washer 11, a variable length handle portion 16 and a gripping end element 18. The longitudinal axis line 9 passes through the through opening 8 of the cavity portion 1, the membrane through opening 6 and the handle through opening 10. The membrane disc 5 is formed from the outer cover 2, in the continuation thereof, in a connecting portion 20 in a curved manner by the confluence of materials. The membrane disc 5 is thicker than the outer cover 2. The membrane disc 5 is perpendicular to the longitudinal axis line 9. Preferably, a freely moving object 15, a magnet or a scent-containing material is placed in the closed cell portion 4. There are scent openings 14 in the outer cover 2 covering the closed cell portion 4 to enhance evaporation from the scent-containing object 15. There is an embossed surface element 13 and/or guide strip 12 on the surface of the outer cover 2 on the side opposite to the cavity portion 1 and/or the closed cell portion 4.

The membrane disc dog toy covered by the patent allows ordinary dog owners to perform instinct and skill development exercises with their dog. The movement of the membrane disc compensates for the lack of dog training expertise and develops the play instinct, predatory instinct of the dog. By means of the membrane disc, the shock caused to the person holding the toy by the micro-vibrations resulting from the pulling force of the dog, acting on the joints of the wrist, elbow, shoulder, hip and spine, can be eliminated during the exercises. The device is suitable for allowing physically disabled, physically weak, or mentally disabled people to play with dogs. The design, material of the membrane greatly influences the stretching, and thus the micro-vibration damping capacity. The risk of the handle or the fixing end element being torn out while playing is reduced to the minimum by the fact that the fixing end element is held not directly by the outer cover, but by the membrane disc covered by the outer cover. The outer cover has no direct function in withstanding the pulling force, it only limits the stretching of the membrane disc. This allows the safe use of the membrane disc dog toy.

### List of reference numbers

- 1): cavity portion
- 2): outer cover
- 3): handle
- 4): closed cell portion
- 5): membrane disc
- 6): membrane through opening
- 7): fixing end element
- 8): through opening
- 9): longitudinal axis line
- 10): handle through opening
- 11): washer
- 12): guide strip
- 13): embossed surface element
- 14): scent opening
- 15): object
- 16): variable length handle portion
- 17): bite body
- 18): gripping end element
- 19): membrane disc dog toy
- 20): connecting portion

## Claims

1. A membrane disc dog toy comprising a handle (3) and a bite body (17), where said bite body (17) comprises a cavity portion (1) covered by an elastic outer cover (2) having at least one through opening (8) and a handle through opening (10) around an axis line (9), and said handle (3) extending beyond the outer cover (2) has a fixing end element (7) fixed in the cavity portion (1), **characterized in that** a membrane disc (5) is formed from the outer cover (2) by the confluence of materials, said membrane disc (5) separates a closed cell portion (4) from the cavity portion (1) on the side towards the handle through opening (10), furthermore there is a membrane through opening (6) in the membrane disc (5) around the longitudinal axis line (9), which is connected with the handle through opening (10) on the opposite side of the closed cell portion (4) around the longitudinal axis line (9) by a variable length handle portion (16) of the handle (3) of the membrane disc dog toy (19) passing through the closed cell portion (4) in the direction of the longitudinal axis line (9), furthermore the variable length handle portion (16) is led through the membrane through opening (6) and ends in the fixing end element (7) covering the membrane through opening (6) on the side towards the cavity portion (1), furthermore the membrane disc (5) stretches in the direction of the handle through opening (10) as a function of the pulling force acting on the handle (3).

2. The membrane disc dog toy according to claim 1, **characterized in that** the diameter of the closed cell portion (4) perpendicular to the longitudinal axis line (9) is larger in the line of the membrane disc (5) than the diameter of the closed cell portion (4) on the side opposite to the membrane disc (5), containing the handle through opening (10).

3. The membrane disc dog toy according to claims 1-2, **characterized in that** the maximum stretching of the membrane disc (5) in the closed cell portion (4) is limited by the surface towards the closed cell portion (4) of the outer cover (2) towards the handle through opening (10).

4. The membrane disc dog toy according to claims 1-3, **characterized in that** the membrane disc (5) is perpendicular to the longitudinal axis line (9) or protrudes into the cavity portion (1).

5. The membrane disc dog toy according to claims 1-4, **characterized in that** the diameter of the through opening (8) of the outer cover (2) is larger than the diameter of the membrane through opening (6).

6. The membrane disc dog toy according to claims 1-5, **characterized in that** the fixing end element (7) has a washer disc (11).

7. The membrane disc dog toy according to claims 1-6, **characterized in that** there is an embossed surface element (13) on the outer cover (2), protruding from the surface thereof.

8. The membrane disc dog toy according to claims 1-7, **characterized in that** the outer cover (2) of the closed cell portion (4) has scent openings (14) with a diameter of maximum 10 percent of that of the handle through opening (10).

9. The membrane disc dog toy according to claims 1-8, **characterized in that** there is at least one embossed guide strip (12) on the outer cover (2), running perpendicularly to the longitudinal axis line (9).

## Patentansprüche

1. Hundespielzeug mit einer Membranscheibe, bestehend aus einem Handgriff (3) und einem Bisskörper (17), wobei der Bisskörper (17) einen Hohlraumbereich (1) umfasst, der von einer elastischen Außenhülle (2) mit mindestens einer Durchgangsöffnung (8) und einer Handgriffs-Durchgangsöffnung (10) um eine Achsenlinie (9) bedeckt wird, und der Handgriff (3), der über die Außenhülle (2) hinausgeht, verfügt über ein im Hohlraumbereich (1) fixiertes Befestigungsendelement (7), **das dadurch gekennzeichnet ist, dass** eine Membranscheibe (5) durch das Zusammentreffen von Materialien aus der Außenhülle (2) gebildet wird, diese Membranscheibe (5) trennt einen geschlossenen Zellabschnitt (4) vom Hohlraumbereich (1) auf der Seite zur Handgriffs-Durchgangsöffnung (10), ferner befindet sich eine Membran-Durchgangsöffnung (6) in der Membranscheibe (5) um die Längsachsenlinie (9), die mit der Griffs-Durchgangsöffnung (10) auf der gegenüberliegenden Seite des geschlossenen Zellabschnitts (4) um die Längsachsenlinie (9) durch einen längenvariablen Griffteil (16) des Handgriffs (3) des Membranscheiben-Hundespielzeugs (19) verbunden ist, der durch den geschlossenen Zellabschnitt (4) in Richtung der Längsachsenlinie (9) führt, ferner wird der längenvariable Griffteil (16) durch die Membran-Durchgangsöffhung (6) geführt und endet im Befestigungsendelement (7), das die Membran-Durchgangsöffhung (6) seitlich zum Hohlraumbereich hin (1) bedeckt, ferner dehnt sich die Membranscheibe (5) in Richtung der Handgriffs-Durchgangsöffnung (10) entsprechend der Zugkraft, die auf den Handgriff (3) wirkt.

2. Das Membranscheiben-Hundespielzeug nach Anspruch 1 **ist dadurch gekennzeichnet, dass** der Durchmesser des geschlossenen Zellabschnitts (4) senkrecht zur Längsachsenlinie (9) in der Linie der Membranscheibe (5) größer ist als der Durchmesser des geschlossenen Zellabschnitts (4) auf der gegenüber der Membranscheibe (5) liegenden Seite mit der Handgriffs-Durchgangsöffnung (10).

3. Das Membranscheiben-Hundespielzeug nach den Ansprüchen 1-2 **ist dadurch gekennzeichnet, dass** die maximale Dehnung der Membranscheibe (5) im geschlossenen Zellabschnitt (4) durch die Oberfläche der Außenhülle (2) zum geschlossenen Zellabschnitt (4) in Richtung der Handgriffs-Durchgangsöffnung (10) begrenzt wird.

4. Das Membranscheiben-Hundespielzeug nach den Ansprüchen 1-3 **ist dadurch gekennzeichnet, dass** die Membranscheibe (5) senkrecht zur Längsachsenlinie (9) steht oder in den Hohlraumbereich (1) hineinragt.

5. Das Membranscheiben-Hundespielzeug nach den Ansprüchen 1-4 **ist dadurch gekennzeichnet, dass** der Durchmesser der Durchgangsöffnung (8) der Außenhülle (2) größer ist als der Durchmesser der Membran-Durchgangsöffnung (6).

6. Das Membranscheiben-Hundespielzeug nach den Ansprüchen 1-5 **ist dadurch gekennzeichnet, dass** das Befestigungsendelement (7) eine Anlaufscheibe (11) hat.

7. Das Membranscheiben-Hundespielzeug nach den Ansprüchen 1-6 **ist dadurch gekennzeichnet, dass** sich auf der Außenhülle (2) ein geprägtes Flächenelement (13) befindet, das aus der Oberfläche herausragt.

8. Das Membranscheiben-Hundespielzeug nach den Ansprüchen 1-7 **ist dadurch gekennzeichnet, dass** die Außenhülle (2) des geschlossenen Zellabschnitts (4) Duftöffnungen (14) mit einem Durchmesser von maximal 10 Prozent der Handgriffs-Durchgangsöffnung (10) aufweist.

9. Das Membranscheiben-Hundespielzeug nach den Ansprüchen 1-8 **ist dadurch gekennzeichnet, dass** sich mindestens ein geprägter Führungsstreifen (12) auf der äußeren Abdeckung (2) befindet, der senkrecht zur Längsachsenlinie (9) verläuft.

## Revendications

1. Un jouet pour chien à membrane discoïde comprenant une poignée (3) et un corps à mordre (17) dans lequel ce corps à mordre (17) comprend une partie cavité (1) couvert par un couvercle externe (2) ayant au moins une ouverture traversante (8) et une ouverture (10) à travers la poignée autour d'une ligne d'axe longitudinal (9), et ladite poignée (3) s'étendant au-delà du couvercle externe (2) a un élément d'extrémité de fixation (7) fixé dans la partie cavité (1), **caractérisé en ce que** la membrane discoïde (5) est formée à partir du couvercle externe (2) par la confluence de matériaux, ladite membrane discoïde (5) séparant une partie cellule fermée (4) de la partie cavité (1) sur le côté vers l'ouverture (10) à travers la poignée, en outre, il y a une ouverture (6) à travers la membrane dans la membrane discoïde (5) autour de la ligne d'axe longitudinal (9), qui est raccordée avec l'ouverture (10) à travers la poignée sur le côté opposé de la partie cellule fermée (4) autour de la ligne d'axe longitudinal (9) par une partie poignée de longueur variable (16) de la poignée (3) du jouet pour chien à membrane discoïde (19) passant à travers la partie cellule fermée (4) dans la direction de la ligne d'axe longitudinal (9), en outre, la partie poignée de longueur variable (16) est dirigée à travers l'ouverture (6) à travers la membrane et se termine dans un élément d'extrémité de fixation (7) recouvrant l'ouverture (6) à travers la membrane sur le côté orienté vers la partie cavité (1), en outre, la membrane discoïde (5) s'étire dans la direction de l'ouverture (10) à travers la poignée en fonction de la force de traction agissant sur la poignée (3).

2. Le jouet pour chien à membrane discoïde selon la revendication 1, **caractérisé en ce que** le diamètre de la partie cellule fermée (4) perpendiculaire à la ligne d'axe longitudinal (9) est plus grand dans la ligne de la membrane discoïde (5) que le diamètre du partie cellule fermée (4) sur le côté opposé à la membrane discoïde (5), contenant l'ouverture (10) à travers la poignée.

3. Le jouet pour chien à membrane discoïde selon les revendications 1 à 2, **caractérisé en ce que** l'étirement maximal de la membrane discoïde (5) dans la partie cellule fermée (4) est limité par la surface vers la partie cellule fermée (4) du couvercle externe (2) vers l'ouverture (10) à travers la poignée.

4. Le jouet pour chien à membrane discoïde selon les revendications 1 à 3, **caractérisé en ce que** la membrane discoïde (5) est perpendiculaire à la ligne d'axe longitudinal (9) ou fait saillie dans la partie cavité (1).

5. Le jouet pour chien à membrane discoïde selon les revendications 1 à 4, **caractérisé en ce que** le diamètre de l'ouverture traversante (8) du couvercle externe (2) est plus grand que le diamètre de l'ouverture (6) à travers la membrane.

6. Le jouet pour chien à membrane discoïde selon les revendications 1 à 5, **caractérisé en ce que** l'élément d'extrémité de fixation (7) a un disque de rondelle (11).

7. Le jouet pour chien à membrane discoïde selon les revendications 1 à 6, **caractérisé en ce qu'**il y a un élément de surface en relief (13) sur le couvercle externe (2), faisant saillie de sa surface.

8. Le jouet pour chien à membrane discoïde selon les revendications 1 à 7, **caractérisé en ce que** le couvercle externe (2) de la partie cellule fermée (4) présente des ouvertures d'odeur (14) d'un diamètre maximal de 10 pour cent de celui de l'ouverture (10) à travers la poignée.

9. Le jouet pour chien à membrane discoïde selon les revendications 1 à 8, **caractérisé en ce qu'**il y a au moins une bande de guidage en relief (12) sur le couvercle externe (2), s'étendant perpendiculairement à la ligne d'axe longitudinal (9).
